# EUROPEAN PATENT APPLICATION

(11) **EP 1 806 496 A1**
(43) Date of publication of application: **11.07.2007**
(21) Application number: 06250024.4
(22) Date of filing: 04.01.2006
(51) Int. Cl.: F02M 25/07, F16K 1/44

(54) **A valve for controlling exhaust gas recirculation flow in an engine**

(71) Applicant: Delphi Technologies, Inc., Troy, MI 48007 (US)
(72) Inventor: Simion, Hugues, 54430 Heumont (FR)
(74) Representative: Waller, Stephen

(57) **Abstract**

A valve for controlling exhaust gas recirculation flow in an engine, the valve comprising a valve body, a first valve member co-operable with a first valve seat provided in a first flow passage within the valve body, a second valve member co-operable with a second valve seat provided in a second flow passage with the valve body, and actuating means having an actuating member capable of actuating both the first and second valve members, said actuating member being moveable between a first position wherein the first valve member is in contact with the first valve seat and the second valve member is in contact with the second valve seat to close both the first and second flow passages, a second, intermediate position wherein the first valve member is urged away from the first valve seat while the second valve seat remains in contact with the second valve seat to allow gases to pass through only the first flow passage to provide a first or low flow configuration, and a third position wherein both the first and second valve members are urged away from their respective valve seats to allows gases to pass though both the first and second flow passages to provide a second or high flow configuration. Preferably the first valve member is axially spaced from the second valve member.

## Description

The present invention relates to a valve for controlling exhaust gas recirculation (EGR) in an internal combustion engine and in particular to a valve for varying the EGR flow to the engine.

It is known to recirculate exhaust gases to the intake of an internal combustion engine in order to limit nitrogen oxide (NOx) emissions from the exhaust system.

Known EGR valves comprise a pintle type lift valve having an axially moveable valve member with a mushroom shaped valve head connected to a pintle shaft. The valve head is seatable upon on valve seat within a valve body to control the flow between an inlet and an outlet on opposite sides of the valve seat. A solenoid actuated armature is provided to drive the valve axially to open and close the valve in a controlled manner to obtain the required amount of EGR under different engine operating conditions. The valve is normally biased closed by means of a spring.

Where a large variation in EGR flow is required, valve is adapted such that the available valve lift and/or the shape of the valve head and valve body in the region of the valve seat can provide the required flow variation. To achieve sufficient EGR flow, a relatively large valve lift (and thus associated armature travel) and/or a large valve seat diameter is required. During initial opening of such a valve the increase in EGR flow rate as a function of valve lift is relatively high, leading to difficulty is accurate EGR flow control at low flow rates. Thus, with known designs of EGR valve it is difficult to provide accurate flow control for small EGR flow rates whilst at the same time providing large EGR flow rates and thus the EGR valve does not operate optimally across the full range of engine operating conditions.

According to the present invention there is provided a valve for controlling exhaust gas recirculation flow in an engine, the valve comprising a valve body, a first valve member co-operable with a first valve seat provided in a first flow passage within the valve body, a second valve member co-operable with a second valve seat provided in a second flow passage with the valve body, and actuating means having an actuating member capable of actuating both the first and second valve members, said actuating member being moveable between a first position wherein the first valve member is in contact with the first valve seat and the second valve member is in contact with the second valve seat to close both the first and second flow passages, a second, intermediate position wherein the first valve member is urged away from the first valve seat while the second valve seat remains in contact with the second valve seat to allow gases to pass through only the first flow passage to provide a first or low flow configuration, and a third position wherein both the first and second valve members are urged away from their respective valve seats to allows gases to pass though both the first and second flow passages to provide a second or high flow configuration.

Preferably the first valve member is axially spaced from the second valve member. More preferably, the first and second valve members comprise coaxially arranged pintle valves.

In one embodiment the actuating member comprises a pintle shaft provided on the first valve member and extending through the second valve member, the second valve member being slidably mounted on the pintle shaft, a shoulder or radial abutment being provided on the pintle shaft such that said shoulder is spaced from the second valve member when the actuating member moves between its first and second positions, the shoulder abutting the second valve member such that the pintle shaft acts on the second valve member when the actuating member moves between its second and third positions.

Biasing means, such as a compression spring mounted between the first and second valve members, may be provided for urging the second valve member towards the second valve seat.

Preferably the actuating means comprises a solenoid.

An embodiment of the apparatus according to the present invention will now be described, with reference to the accompanying drawings, in which:-
Fig. 1 is a schematic view of an EGR valve according to a preferred embodiment of the present invention showing the valve is a closed configuration;
Fig. 2 is a schematic view of the valve of Fig. 1 showing the valve in a low flow configuration;
Fig. 3 is schematic view of the valve of Fig. 1 showing the valve in a high flow configuration.

As shown in the drawings, the valve comprises a valve body 1 having an least one EGR inlet 2 and at least one EGR outlet 3.

A first or lower flow passage 10 extends on opposite sides of a first or lower valve seat 12. A first or lower pintle valve 14 is reciprocable on a valve axis within the valve body 1 between a first position wherein the first pintle valve 14 engages the first valve seat 12 to close fluid communication through the first flow passage 10 and a second position wherein the first pintle valve 14 is spaced from the first valve seat 12 to permit EGR gases to flow through the first flow passage 10.

A second or upper flow passage 20 extends on opposite sides of a second or upper valve seat 22. A second or upper pintle valve 24 is reciprocable on the valve axis, coaxially with the first pintle valve 14, within the valve body 1 between a second position wherein the second pintle valve 24 engages the second valve seat 22 to close fluid communication through the second flow passage 20 and a second position wherein the second pintle valve 24 is spaced from the second valve seat 22 to permit EGR gases to flow through the second flow passage 20.

A pintle shaft 30 extends from the first pintle valve 14 and is connected to an armature of a solenoid (not shown) for actuating the EGR valve. The second pintle valve 24 is slidably mounted on the pintle shaft 30.

The pintle shaft 30 comprises a first diameter portion 32, extending from the first pintle valve 14 and through the second pintle valve 24, the second pintle valve being axially slidable upon said first portion 32 of the pintle shaft 30, and a second diameter portion 34, said second diameter portion 34 being of greater diameter than the first diameter portion 32 and defining a shoulder 36 between said first and second portions, said shoulder being adapted to abut the second pintle valve 24 to open the second pintle valve 24 as will be described below. A compression spring 40 is located between the first and second pintle valves 14,24 to bias the second pintle valve 24 towards the second valve seat 22.

In operation, when no EGR flow is required, the solenoid is actuated (or alternatively a spring biasing member is provided) to hold the first pintle valve 14 against the first valve seat 12. In such configuration, the shoulder 36 is spaced from the second pintle valve 24 and thus the second pintle valve is held against the second valve seat 22 by the spring 40.

To provide greater control over EGR flow rate at low flow requirements while still providing high EGR flow rate when required, the first pintle valve 14 and first valve seat 12 is smaller in diameter than the second pintle valve 24 and second valve seat 22.

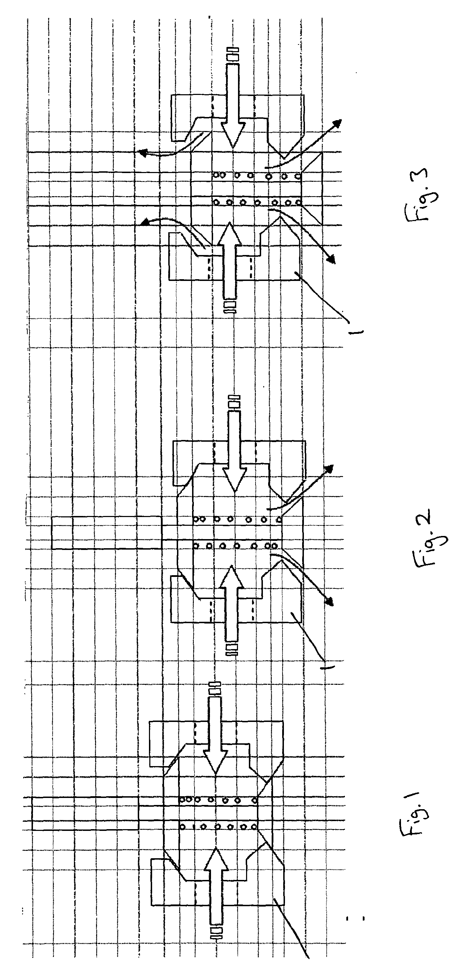

When a low EGR flow rate is required, the solenoid is actuated to move the pintle shaft 30 and the associated first pintle valve 14 to a second or low flow configuration, shown in Fig. 2, whereby EGR gases can pass through the first flow passage. The shoulder 36 remains spaced from the second pintle valve 24 such that the second pintle valve 24 remains in contact with the second valve seat 22 under the action of the spring 40.

When a large EGR flow rate is required, the solenoid is further actuated to move the pintle shaft 30 to a third or high flow configuration wherein the first pintle valve 14 is further spaced from the first valve seat 12. In such high flow configuration, the shoulder 36 of the pintle shaft 30 abuts the second valve seat and pushes the second pintle valve 24 away from the second valve seat 22, as shown in Fig. 3, whereby EGR gases can pass through both the first and second flow passages.

Thus, for low EGR flow requirements, only the first pintle valve 14 and first flow passage 10 is used. Because of the relatively small diameter of the first pintle valve 14 and first valve seat 12, the change in flow rate for a given stroke of the pintle shaft 30 is small, allowing accurate control of the flow rate.

For high flow requirements, both the first and second pintle valves 14,24 and first and second flow passages 10,20 are used, allowing greater flow for a given pintle shaft 30 stroke than when only the first pintle valve 14 is used in the low flow configuration.

Modifications and improvement may be made to the foregoing, without departing from the scope of the present invention.

## Claims

1. A valve for controlling exhaust gas recirculation flow in an engine, the valve comprising a valve body, a first valve member co-operable with a first valve seat provided in a first flow passage within the valve body, a second valve member co-operable with a second valve seat provided in a second flow passage with the valve body, and actuating means having an actuating member capable of actuating both the first and second valve members, said actuating member being moveable between a first position wherein the first valve member is in contact with the first valve seat and the second valve member is in contact with the second valve seat to close both the first and second flow passages, a second, intermediate position wherein the first valve member is urged away from the first valve seat while the second valve seat remains in contact with the second valve seat to allow gases to pass through only the first flow passage to provide a first or low flow configuration, and a third position wherein both the first and second valve members are urged away from their respective valve seats to allows gases to pass though both the first and second flow passages to provide a second or high flow configuration.

2. A valve as claimed in claim 1, wherein the first valve member is axially spaced from the second valve member.

3. A valve as claimed in claim 2, wherein the first and second valve members comprise coaxially arranged pintle valves.

4. A valve as claimed in claim 3, wherein said actuating member comprises a pintle shaft provided on the first valve member and extending through the second valve member, the second valve member being slidably mounted on the pintle shaft, a shoulder or radial abutment being provided on the pintle shaft such that said shoulder is spaced from the second valve member when the actuating member moves between its first and second positions, the shoulder abutting the second valve member such that the pintle shaft acts on the second valve member when the actuating member moves between its second and third positions.

5. A valve as claimed in claim 4, wherein biasing means is provided for urging the second valve member towards the second valve seat.

6. A valve as claimed in claim 5, wherein the biassing means comprises a compression spring mounted between the first and second valve members.

7. A valve as claimed in claim 6, wherein the compression spring is coaxial with the pintle shaft.

8. A valve as claimed in any preceding claim, wherein the actuating means comprises a solenoid.

9. A valve as claimed in any preceding claim, wherein the diameter of the first valve seat is smaller than the diameter of the second valve seat.
